# EUROPÄISCHE PATENTSCHRIFT

(11) **EP 0 638 779 B1**
(45) Veröffentlichungstag und Bekanntmachung des Hinweises auf die Patenterteilung: **20.05.1998**
(21) Anmeldenummer: 94111362.3
(22) Anmeldetag: 21.07.1994
(51) Int. Cl.: F26B 1/00, F26B 7/00, F26B 5/16

(54) **Verfahren zum Trocknen von klebenden Stoffen**
Process for drying sticky materials
Procédé de séchage de matériaux collants

(30) Priorität: 12.08.1993 DE 4327037
(43) Veröffentlichungstag der Anmeldung: 15.02.1995
(73) Patentinhaber: Chemische Werke Kluthe GmbH, 69115 Heidelberg (DE)
(72) Erfinder: Fleischmann, Dieter, Dr., D-69215 Gaiberg (DE); Kluthe, Hans, D-69126 Heidelberg (DE)
(74) Vertreter: Grussdorf, Jürgen, Dr.

(56) Entgegenhaltungen:
- EP-A- 0 312 803
- DE-A- 3 739 224
- DE-A- 4 125 909
- DE-C- 652 309
- DE-C- 947 870
- DE-C- 3 936 974

## Beschreibung

In der Industrie fallen große Mengen von klebrigen Produkten unterschiedlichster Konsistenz an, die für die weitere Bearbeitung oder Entsorgung getrocknet werden sollten, wobei als Entsorgung entweder eine Deponierung oder eine Verbrennung in Frage kommt.

Solche Produkte sind vor allem :
- Reststoffe und Abfallprodukte aus der Kleb- und Dichtstoffindustrie;
- Rückstände aus Destillationsprozessen;
- Rückstände und Abfallprodukte von Farben und Lacken, Wachsen oder Harzemulsionen;
- Schlämme aus Öltrennanlagen.

Die Trocknung der Schlämme bringt den Vorteil, daß bei einer Deponie die entsprechenden Mengen geringer werden, und bei einer Verbrennung dieser Produkte der Brennwert der Reststoffe sich erhöht.

Ein Hauptproblem der Trocknung der meisten klebenden Reststoffe besteht darin, daß mit abnehmendem Flüssigkeitsgehalt eine zähpastöse Phase durchlaufen wird, bei der die Produkte zu großen zähen Klumpen zusammentreten, die Wandungen der Apparatur verkrusten und nicht selten die beweglichen Einbauten blockieren, was zum Stillstand des Verfahren und ggf. sogar zu einer Beschädigung der Vorrichtung führen kann. Weiterhin wird das Innere größerer Brocken praktisch nicht weiter getrocknet, so daß, wenn solche Brocken zur weiteren Verarbeitung zerkleinert werden, wiederum das klebende Innere freigelegt wird und die weitere Verarbeitung dadurch erschwert oder verhindert wird.

Mit der Entwicklung und dem Einsatz von energieintensiven und mit komplizierten Einbauten ausgestatteten Trocknern wurde versucht, zumindestens einen Teil dieser schwierigen Produkte zu trocknen. Bei besonders zum Verkleben und zum Verkrusten neigenden Reststoffen sind aber auch solche Trockner nicht ausreichend, so daß diese Stoffe ohne weitere Trocknung als Sondermüll deponiert oder verbrannt werden müssen.

Es stellte sich daher die Aufgabe, ein Verfahren zu entwickeln, mit dem es möglich ist, klebende Stoffe so zu trocknen, daß diese in Form eines feinen Granulats oder Pulvers anfallen, ohne bei der Konzentrierung eine zur Verklumpung führende zähpastöse Phase zu durchlaufen.

Diese Aufgabe wird durch die Merkmale des Hauptanspruches gelöst und durch die der Unteransprüche gefördert.

Aus der DE-A 41 25 909 und der DE-C 37 39 224 ist bekannt, daß man Lackabfälle, die in Lackspritzkabinen als sogenannter "Overspray" anfallen mit einem Luftstrom absaugen und mit Wasser auswaschen kann. Um die sehr feinen Lacktröpfchen zu koagulieren wird dabei dem Wasser feingemahlenes Polyurethanschaumpulver zugesetzt. Die Lacktröpfchen lagern sich so an das Polyurethanpulver an und bilden größere Aggregate, die sich mittels Zentrifugen oder Oberflächenabscheidern weitgehend von dem Wasser trennen lassen, welches in den Prozeß zurückgeführt wird. Die entstehenden Lackkoagulate sollen nicht klebend und trockenbar sein. Bei Nachbearbeitung dieses Verfahrens zeigt sich, daß beim Trocknen auch solcher Produkte ein Bereich durchlaufen wird, bei dem die Partikel, aufgrund der Klebwirkung der Lackbestandteile zusammensintern und größere Brocken und Aggregate bilden, welche einen ordnungsgemäßen Ablauf des Trockenvorgangs verhindern.

Aus der DE-C 39 36 974 ist weiterhin bekannt geworden, daß aus den Lackierkabinen abgezogene Lackauswaschwasser mit einer Aufschlämmung kleinster Partikel mit großer Oberfläche, insbesondere Tonerde, als physikalisch wirkendem Entklebungsmittel zu koagulieren, um die mit einer Zentrifuge abgetrennten Produkte anschließend "vorsichtig" bei Temperaturen von 90-110 °C zu trocknen, so daß die Reaktionsfähigkeit der enthaltenen Bindemittel erhalten bleibt. Die noch etwa 10 % Resffeuchtigkeit enthaltenden rieselfähigen Produkte werden dann mit Fasermaterial zusammen verpreßt und unter Hitzeeinwirkung ausgehärtet und zu Ende getrocknet. Für eine Verbrennung oder Recyclisierung der Lackanteile ist dieses Verfahren nicht geeignet, da die größeren Mengen an Tonerde dem entgegenstehen.

Überraschenderweise wurde nunmehr festgestellt, daß ein auf normale Weise, beispielsweise durch Zumischen von Wachsen, Tensiden, Blockungsmitteln etc. koaguliertes Lackmaterial oder ein als Destillationsrückstand anfallendes klebriges Produkt, oder durch Auswaschen von Farbstoff- oder Klebstoffbehältern anfallender Klebstoffschlamm problemlos in relativ einfachen Vorrichtungen getrocknet werden kann, wenn dem Schlamm nach der Koagulierung ein fein vermahlenes Polyurethanschaumpulver in einer Menge zwischen 1 und 20 Gew.-% der Klebemittel zugefügt wird. Im Gegensatz zu den bekannten Verfahren, bei denen feine Lack- oder Klebstoffteilchen sich an die Oberfläche der Polyurethan- oder Tonpartikel anlagern und diese Partikel wiederum mit entsprechenden anderen Partikeln sich zu dem endgültigen Koagulat zusammen lagern, werden erfindungsgemäß die bereits koagulierten Partikel oberflächlich mit einer Polyurethanpulverschicht überzogen, so daß sie nach außen nicht mehr klebrig wirken und sich damit beim späteren Trocknungsvorgang auch nicht mehr zu größeren Brocken zusammen lagern. Da diese Oberflächenschicht nur sehr dünn sein muß, bewirken bereits Zuschlagmengen von wenigen Prozent eine wirksame Entklebung, während gemäß DE-C 37 39 224 30 % Polyurethan bezogen auf den Lackanteil so weitgehend noch von Lack eingeschlossen werden, daß beim anschließenden Trockenvorgang dieses Partikel quasi miteinander verschmelzen, weil das Polyurethan im Inneren eingehüllt ist.

Während des Aufheizvorgangs härten die durch das Polyurethan eingehüllten Bindemittel aus, so daß nach dem Trockenvorgang eine feste, krümelige Masse vorliegt. Diese kann ohne weiteres transportiert, deponiert, oder weiterverarbeitet werden.

Aufgrund der weitgehenden Entklebung der Produkte können relativ einfache Trockner eingesetzt werden, beispielsweise Vakuumschaufeltrockner, welche über Wände und Schaufelelemente die für die Trocknung notwendige Wärme zuführen. Auch Wirbelbett-Trockner können mit Erfolg eingesetzt werden, da die Partikel sich nicht mehr zusammenlagern und daher das Wirbelbett ohne Probleme aufrechterhalten wird, bis das Produkt durchgetrocknet ist.

Die verwendeten Polyurethanschaumstoffe sind preiswerte Abfallprodukte, die bei der Herstellung oder Entsorgung von Polyurethanschaumstoffprodukten erhalten werden. Bei der Verbrennung der erfindungsgemäß erhaltenen Produkte verbrennen diese Stoffe mit und bilden somit keine zusätzlich Asche. Bei der heute zunehmend interessanteren Verwertung von Altkunststoffen durch Hydrierung können diese Produkte auch eingesetzt werden, wobei sowohl aus den Klebstoffschlämmen, als auch aus dem zugesetzten Polyurethan wieder wertvolle Kohlenwasserstoffe gewonnen werden (Verwertung von Altkunststoffen durch Hydrierung, Holighaus, Niemann, Sonderdruck aus: Kunststoffberater 4/93).

Die erfindungsgemäß vorgenommene Umhüllung der klebenden Schlammpartikel mit Polyurethanpulvem hat den zusätzlichen Vorteil, daß sich aus diesem Schlamm ein großer Teil des enthaltenen Wassers mittels billiger Pressen auspressen läßt, und somit beispielsweise ein Schlamm der aus der Koagulationsstufe mit einem Wassergehalt von ca. 50 % anfällt, auf etwa einen Wassergehalt von 20 % gebracht werden kann, wodurch selbstverständlich die zum Trocknen aufzuwendende Energie erheblich verringert wird.

Es sich als vorteilhaft herausgestellt, die Polyurethanpulver mit etwa 20 Gew.-% eines höhersiedenden Mineralöls zu vermischen, wobei einerseits das so behandelte Produkt anschließend weniger staubt und damit besser gehandhabt werden kann, andererseits aber diese offensichtlich oberflächlich mit einer dünnen Mineralölschicht behafteten Polyurethankörner besser auf die klebenden Koagulatteilchen aufziehen. Auch ein Zusatz von Aktivkohle, in einer Menge bis zu der Menge des zugesetzten Polyurethans hat sich in manchen Fällen als vorteilhaft erwiesen, insbesondere wenn die zu entklebenden Produkte niederigsiedende Lösungsmittel enthalten, da diese von der Aktivkohle aufgenommen und damit die klebende Wirkung insgesamt vermindert wird. Soweit die klebenden Stoffe oder die Suspension sauer reagieren oder chlorhaltig sind, ist es weiterhin förderlich, zur Säurebindung Kalk zuzusetzen.

Durch die erfindungsgemäße Verfahrensweise ist es auf relativ einfache Weise gelungen, praktisch beliebige klebende Stoffe oder Bindemittel enthaltende Suspensionen in einen nicht klebenden Zustand zu überführen und in dieser Weise mit einfach aufgebauten, energetisch wirtschaftlich arbeitenden Trocknern zu trocknen. Bei diesem Verfahren fällt in allen Fällen ein feinkörniges Material an, welches problemlos weiterverarbeitet, verbrannt oder deponiert werden kann.

### Beispiel 1

### Trocknung von Lackschlamm

Ein Lackschlamm in Form eines Lackkoagulats aus der lackverarbeitenden Industrie weist neben 38 Gew.-% Wasser, 1,5 Gew.-% organische Lösungsmittel, 31 Gew.-% Pigmente und Füllstoffe und 29,5 Gew.-% aktive, bei der Trocknung stark zum Kleben neigende Bindemittel auf Basis Alkyd-Melaminharz auf.

1 t dieses Rückstandes wird mit 100 kg einer Mischung aus 80 Gew.-% Polyurethanpulver (Schüttdichte 80-100 kg/m³) und 20 Gew.-% Mineralöl intensiv vermischt. Nach einer Mischzeit von 10 Minuten wird die so konditionierte Ware über ein Förderband in den Eintragstrichter eines Vakuumschaufeltrockners gegeben.

Es ist ebenfalls möglich, das vorkonditionierte Material zuerst einer Filterpresse zuzuführen. Der Wassergehalt von 38 Gew.-% kann durch den Preßvorgang um 23 Gew.-% auf 15 Gew.-% reduziert werden. Der Filterkuchen wird sodann über das Förderband in den Eintragstrichter eines Vakuumschaufeltrockners gegeben.

Bei einer Gutstemperatur von 150 °C und einem Vakuum von 200 mBar wird über einen Zeitraum von 3 Stunden die Lösemittelphase abdestilliert und nach einem Kondensator aufgefangen.

Das rieselfähige Trockengut wird über den Bodenschacht des Trockners ausgetragen und ohne weitere Aufarbeitung in entsprechende Gebinde abgefüllt.

### Beispiel 2

### Trocknung von Destillationsrückständen

Ein Destillationsrückstand aus der Farbindustrie weist neben 63 Gew.-% organischen Lösemitteln, 9,5 Gew.-% Wasser, 7 Gew.-% Pigmente und Füllstoffe, 20,5 Gew.-% noch aktive, stark klebende Harze auf.

1 t dieses Rückstandes wird mit 100 kg einer Mischung aus 80 Gew.-% Polyurethanpulver (Schüttdichte 80-100 kg/m³) und 20 Gew.-% Mineralöl intensiv vermischt. Nach einer Mischzeit von 10 Minuten wird die so konditionierte Ware über ein Förderband in den Eintragstrichter eines Vakuumschaufeltrockners gegeben.

Bei einer Gutstemperatur von 150 °C und einem Vakuum von 200 mBar wird über einen Zeitraum von 3 Stunden die Lösemittelphase abdestilliert und nach einem Kondensator aufgefangen.

Das rieselfähige Trockengut wird über den Bodenschacht des Trockners ausgetragen und ohne weitere Aufarbeitung in entsprechende Gebinde abgefüllt.

## Patentansprüche

1. Verfahren zur Trocknung von klebende Stoffe und Lösemittel enthaltenden, wäßrigen Suspensionen in Gegenwart von Hilfsstoffen mit großer spezifischer Oberfläche, **dadurch gekennzeichnet,** daß der Suspension, die in bekannter Weise gebildete Koagulate der klebenden Stoffe enthält, 5-30 % eines Polyurethanschaumpulvers mit einer Schüttdichte von 50-500 kg/m³ zugefügt werden, intensiv gemischt wird und diese Mischung bei Temperaturen von 50-200 °C und einem Druck zwischen 100 und 1000 mBar durch Abdestillieren der Lösemittelphase getrocknet wird.

2. Verfahren gemäß Anspruch 1, **dadurch gekennzeichnet**, daß die Trocknung bei Temperaturen von 100-150 °C und einem Druck von 100-200 mBar durchgeführt wird.

3. Verfahren gemäß Anspruch 1 oder 2, **dadurch gekennzeichnet,** daß das Verfahren kontinuierlich durchgeführt wird, oder chargenweise durchgeführt wird, wobei die Trocknungszeit ein bis drei Stunden beträgt.

4. Verfahren gemäß einem der Ansprüche 1 bis 3, **dadurch gekennzeichnet**, daß nach der Trocknungsphase eine Nachhärtung der enthaltenen Bindemittel, bei einer Temperatur von 150-200 °C durchgeführt wird.

5. Verfahren nach einem der Ansprüche 1 bis 4, **dadurch gekennzeichnet**, daß das Polyurethan 5-20 Gew.-% Mineralöl enthält.

6. Verfahren gemäß einem der Ansprüche 1 bis 5, **dadurch gekennzeichnet**, daß der Mischung zusätzlich Aktivkohle und/oder Kalk, und/oder Tenside zugemischt werden.

## Claims

1. Process for the drying of aqueous suspensions containing sticky materials and solvents in the presence of auxiliary materials with large specific surface, characterised in that to the suspension, which contains coagulates of the sticky materials formed in known manner, there are added 5 - 30 wt.% of a polyurethane foam powder with a bulk density of 50 - 500 kg/m³, it is intensively mixed and this mixture is dried at temperatures of 50 - 200°C and a pressure between 100 and 1000 mBar by distilling off of the solvent phase.

2. Process according to claim 1, characterised in that the drying is carried out at temperatures of 100 - 150°C and a pressure of 100 - 200 mBar.

3. Process according to claim 1 or 2, characterised in that the process is carried out continuously or is carried out batchwise, whereby the drying time amounts to one to three hours.

4. Process according to one of claims 1 to 3, characterised in that, after the drying phase, a post-hardening of the binding agents contained is carried out at a temperature of 150 - 200°C.

5. Process according to one of claims 1 to 4, characterised in that the polyurethane contains 5 - 20 wt.% of mineral oil.

6. Process according to one of claims 1 to 5, characterised in that active charcoal and/or chalk and/or tens ides are additionally admixed with the mixture.

## Revendications

1. Procédé pour le séchage de suspensions aqueuses contenant des substances collantes et des solvants, en présence d'adjuvants à grandes surfaces spécifiques, caractérisé en ce qu'on ajoute à la suspension, qui contient des coagulats qui ont été formés de manière connue à partir des substances collantes, une poudre de mousse de polyuréthanne à concurrence de 5 à 30% possédant une masse volumique apparente de 50-500 kg/m³, on mélange intimement et on sèche ce mélange à des températures de 50-200°C et sous une pression entre 100 et 1000 mbar par séparation de la phase de solvant par distillation.

2. Procédé selon la revendication 1, caractérisé en ce qu'on effectue le séchage à des températures de 100-150°C et sous une pression de 100-200 mbar.

3. Procédé selon la revendication 1 ou 2, caractérisé en ce qu'on effectue le procédé en continu ou en ce qu'on l'effectue en discontinu, le temps de séchage s'élevant de 1 à 3 heures.

4. Procédé selon l'une quelconque des revendications 1 à 3, caractérisé en ce qu'on effectue, après la phase de séchage, un durcissement ultérieur du liant présent, à une température de 150-200°C.

5. Procédé selon l'une quelconque des revendications 1 à 4, caractérisé en ce que le polyuréthanne contient de l'huile minérale à concurrence de 5 à 20% en poids.

6. Procédé selon l'une quelconque des revendications 1 à 5, caractérisé en ce qu'on ajoute au mélange, en outre, du charbon actif et/ou de la chaux et/ou des agents tensioactifs.
